# EUROPEAN PATENT SPECIFICATION

(11) **EP 3 528 043 B1**
(45) Date of publication and mention of the grant of the patent: **25.11.2020**
(21) Application number: 19156141.4
(22) Date of filing: 08.02.2019
(51) Int. Cl.: G03B 21/16, G02B 27/01, B60K 35/00

(54) **PROJECTOR AND HEAD-UP DISPLAY DEVICE INCLUDING PROJECTOR**
PROJEKTOR UND HEAD-UP DISPLAY VORRICHTUNG MIT PROJEKTOR
PROJECTEUR ET DISPOSITIF D'AFFICHAGE TÊTE HAUTE COMPORTANT UN PROJECTEUR

(30) Priority: 16.02.2018 JP 2018026054
(43) Date of publication of application: 21.08.2019
(73) Proprietor: Alpine Electronics, Inc., Tokyo 145-8501 (JP)
(72) Inventor: UCHIYAMA, Ryu, Iwaki, Fukushima 970-1192 (JP)
(74) Representative: Schmitt-Nilson Schraud Waibel Wohlfrom Patentanwälte Partnerschaft mbB

(56) References cited:
- JP-A- 2014 146 742
- JP-A- 2016 199 150
- US-A1- 2007 115 438

## Description

The present invention relates to a projector including a blowing system that cools an image generating unit, and to a head-up display device including the projector.

JP 2014-146742 A discloses a head-up display that comprises a housing in which an intake opening for taking air into the inside, an exhaust opening for discharging the taken-in air to the outside, and a duct provided with an air passage therein are formed. A blower is installed inside the duct 60 forming an air passage from the intake opening to the exhaust opening.

JP 2016-199150 A discloses a desiccant device for vehicle that is applied to a head-up display device which is configured to enlarge an image displayed on a display panel by a mirror optical system composed of a plurality of mirrors and cause a virtual image of the image displayed on the display panel to be visually recognized by reflecting the enlarged image on a windshield. The desiccant device for vehicle comprises a desiccant material which is provided over the inside and outside of a case storing the display panel and the mirror optical system.

US 2007/0115438 A1 discloses a projector including a light source unit, a light source side optical system, a display device for producing a projected image to be projected, a projection side optical system for projecting the projected image produced by the display device, and a blower acting as a cooling fan for cooling the light source unit.

JP 2016-137779 A and JP 8-179319 A describe inventions relating to a head-up display device. The head-up display devices described in these publications include a cooling function.

The head-up display device described in JP 2016-137779 A includes a light source, a liquid crystal panel, through which light emitted from a light source passes, and a concave mirror, which projects projection light that has passed through the liquid crystal panel on a windscreen glass to form a virtual image in front of a windscreen glass. In the head-up display device according to JP 2016-137779 A, a portion of a housing that supports a light source serves as a radiating portion. A first blower is disposed on the outer side of the radiating portion, and a second blower, which blows air in a direction different from the direction in which the first blower does, is disposed near a dashboard at an upper portion of a side surface of the housing.

The head-up display device described in JP 8-179319 A includes, in a case, a light source, a heat absorbing glass, through which light emitted from the light source passes, a reflecting mirror, which reflects light that has passed through the heat absorbing glass, and a liquid crystal display board, through which light reflected off the reflecting mirror passes. The housing has an air vent that opposes an end of the heat absorbing glass. Air from an air-conditioning blower is fed to the inside of the housing through the air vent to cool the heat absorbing glass from front and rear surfaces.

The head-up display device described in JP 2016-137779 A cools the light source from outside the housing, whereas the head-up display device described in JP 8-179319 A cools the heat absorbing glass with air. Neither of the devices, however, includes a cooling function for cooling a liquid crystal panel, serving as an image generating unit. Such a structure thus fails to prevent malfunction of the image generating unit with a rise of the temperature in the operating conditions.

Particularly, in a head-up display device, sunlight is concentrated at the image generating unit through the windscreen glass. The concentration of sunlight facilitates heating of the image generating unit to a high temperature, and thus facilitates malfunction of the image generating unit.

The head-up display devices described in JP 2016-137779 A and JP 8-179319 A directly exhaust air having a temperature raised through heat exchange with a heating component. When attached to a vehicle, such devices continuously blow high-temperature air to the other devices (such as a speedometer, a navigation system, or a resin-made structure) disposed adjacent to the devices for a long time, and may adversely affect these devices.

Accordingly, to address the above problem, the present invention aims to provide a projector capable of effectively cooling an image generating unit, preferably including a TFT liquid crystal panel, and a head-up display device including the projector.

The present invention also aims to provide a head-up display device capable of reducing the effect on other neighboring devices.

The invention relates to a projector, a head-up display device, and a vehicle according to the appended claims. Embodiments are disclosed in the dependent claims.

An aspect of the present invention is a projector including a light source, an image generating unit, and an optical system configured to transmit light from the light source through the image generating unit and output the light as projection light. The projector includes a heat-radiating metal member to which heat from the light source is conducted; and a blowing system configured to blow an airflow to the image generating unit. The projector is characterized in that the heat-radiating metal member has an air vent running therethrough, the air vent being configured to allow at least a part of an airflow that is generated at the blowing system and that has passed through the image generating unit.

In a projector according to an aspect of the present invention, the blowing system forms a front airflow, which flows along a front surface facing in a direction in which the image generating unit projects light, and a rear airflow, which flows along a rear surface that receives light from the light source. At least a part of the rear airflow passes through the air vent, and the front airflow is exhausted to the outside without being directed to the air vent.

In a projector according to an embodiment of the present invention, a front translucent plate is disposed in front of the image generating unit, and a rear translucent plate is disposed at a rear of the image generating unit. The rear airflow is formed in a gap between a rear surface of the image generating unit and the rear translucent plate. The front airflow is formed in a gap between a front surface of the image generating unit and the front translucent plate.

A projector according to an embodiment of the present invention may include a rear frame configured to support the image generating unit, and a front frame disposed on the front surface of the image generating unit and configured to hold the front translucent plate.

In a projector according to an embodiment of the present invention, the blowing system may be provided as a plurality of blowing systems, and the plurality of blowing systems may blow airflows to the image generating unit in different directions.

A head-up display device according to an embodiment of the present invention includes any of the above-described projectors, and a directional mirror configured to reflect projection light output from the projector to direct reflected light obliquely upward toward a semitransparent mirror positioned in front of a driver's seat of a vehicle.

In a projector and a head-up display device according to an aspect of the present invention, the blowing system blows an airflow so that the airflow passes through an image generating unit, which may include a TFT liquid crystal panel. Thus, the airflow can cool the image generating unit, and prevent a temperature rise of the image generating unit when sunlight is concentrated.

The airflow generated at the blowing system and that has passed through the image generating unit passes through the air vent running through the heat-radiating metal member. Thus, the airflow is exhausted to the outside while having its temperature lowered, so that the effect of heat on other neighboring devices can be reduced. The heat-radiating metal member can exert the function of radiating heat generated at the light source and the function of radiating heat contained in the airflow that has passed through the image generating unit. Thus, the device can perform effective cooling as a whole.
Fig. 1 illustrates a state where a head-up display device including a projector according to an embodiment of the present invention is mounted on a vehicle;
Fig. 2 illustrates a layout of components of the head-up display device illustrated in Fig. 1;
Fig. 3 is a perspective view of a projector according to an embodiment of the present invention viewed from the front, or in a projection direction;
Fig. 4 is a perspective view of a projector according to an embodiment of the present invention viewed from the rear;
Fig. 5 is an exploded perspective view of a projector according to an embodiment of the present invention viewed from the front;
Fig. 6 illustrates an internal structure of the projector according to an embodiment of the present invention, and is a cross-sectional perspective view of the projector illustrated in Fig. 3, taken along line VI-VI;
Fig. 7 illustrates an air vent formed in a heat-radiating metal member of the projector according to an embodiment of the present invention, and is a cross-sectional perspective view of the projector illustrated in Fig. 3, taken along line VII-VII;
Fig. 8 illustrates an internal structure of the projector according to an embodiment of the present invention, and is a cross-sectional perspective view of the projector illustrated in Fig. 3, taken along line VIII-VIII;
Fig. 9 is a cross-sectional plan view, illustrating a cross section of the cross-sectional perspective view in Fig. 8; and
Fig. 10 is a cross-sectional side view, illustrating a cross section of the cross-sectional perspective view in Fig. 6.

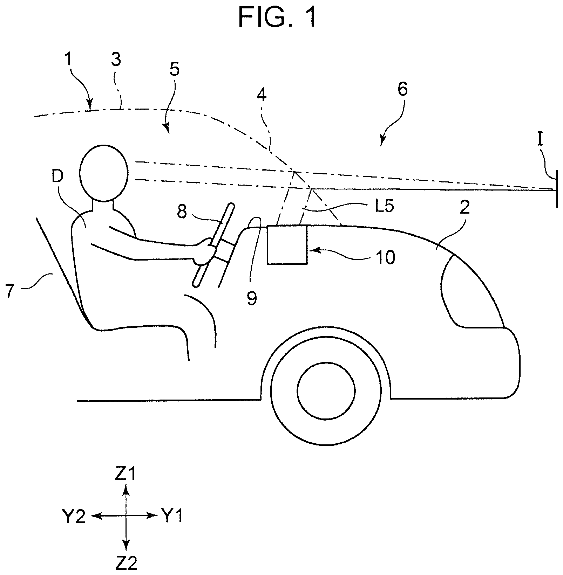

Fig. 1 illustrates a structure in which a head-up display device 10 according to an embodiment of the present invention is mounted on an automobile 1, which is an example of a vehicle.

The automobile 1 includes a windscreen glass 4 disposed between a bonnet portion 2 and a ceiling 3. The windscreen glass 4 divides a vehicle interior space 5 from an exterior space 6 in front of the vehicle. The windscreen glass 4 is curved, and has its inner surface facing the vehicle interior space 5 and its outer surface facing the front exterior space 6. The windscreen glass 4 serves as a semitransparent mirror having a concave surface.

Instead of the windscreen glass 4, a combiner may be used as a semitransparent mirror. The combiner is formed from an opaque synthetic resin material, and disposed on the vehicle interior side of the windscreen glass 4.

A driver's seat 7 is disposed in the vehicle interior space 5, and a steering wheel 8 is disposed in front of the driver's seat 7. In a front portion of the vehicle interior space 5, a dashboard 9 is disposed. A head-up display device (HUD) 10 is embedded inside the dashboard 9.

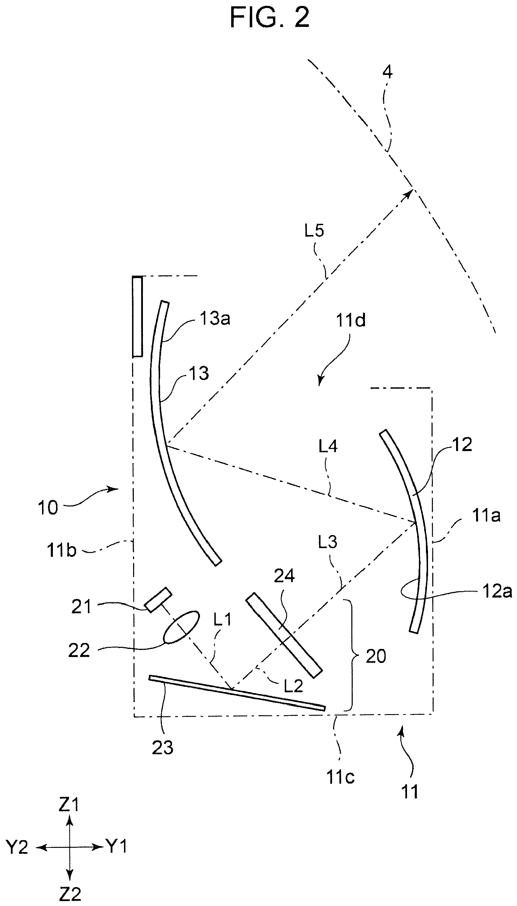

Y1 and Y2 directions and Z1 and Z2 directions illustrated in Fig. 1 and Fig. 2 are directions with respect to the vehicle body of the automobile 1. A Y1 direction is a forward direction with respect to the vehicle body of the automobile 1, and a Y2 direction is a rearward direction with respect to the vehicle body. A Z1 direction is an upward direction with respect to the vehicle body, and a Z2 direction is a downward direction with respect to the vehicle body.

Fig. 2 illustrates a structure of the head-up display device 10.

The head-up display device 10 includes a housing 11. The housing 11 includes a front side portion 11a facing forward (Y1 direction), a rear side portion 11b facing rearward (Y2 direction), and a bottom portion 11c facing downward (Z2 direction). The housing 11 has an opening 11d, which opens to the obliquely upper front (Y1 direction and Z1 direction). The windscreen glass 4 serving as a semitransparent mirror opposes the obliquely upper front of the opening 11d. The opening 11d of the housing 11 is covered with a translucent cover plate.

A projector 20 is disposed at a lower portion of the interior space of the housing 11. The projector 20 includes light sources 21, such as a light emitting device (LED). When the ignition switch of the automobile is turned on, the light sources 21 are lit. As illustrated in Fig. 2, the projector 20 includes a lens 22, through which light from the light sources 21 passes, a plane mirror 23, which reflects off a light beam L1 that has passed through the lens 22, and an image generating unit 24, which allows reflection light L2 to pass therethrough. The reflection light L2 is the light beam L1 reflected off the plane mirror 23. The lens 22 and the plane mirror 23 constitute an optical system that allows light from the light sources 21 to pass through the image generating unit 24 to output projection light L3. The image generating unit 24 includes a transmission TFT liquid crystal panel. The projection light L3 that has passed through the image generating unit 24 of the projector 20 is output to the obliquely upper front.

The image generating unit 24 may include a transmission liquid crystal panel, instead of a transmission TFT liquid crystal panel, or projection-type liquid crystal on silicon (LCOS), instead of a liquid crystal panel.

Inside the housing 11, an intermediate mirror 12 is fixed to a portion at the obliquely upper front of the projector 20 on an inner side of the front side portion 11a of the housing 11. The intermediate mirror 12 is a concave mirror, and has its reflection surface 12a facing rearward. The projection light L3 output from the projector 20 is reflected off the reflection surface 12a of the intermediate mirror 12 to form intermediate reflected light L4. A directional mirror 13 is disposed on the inner side of the rear side portion 11b of the housing 11. The directional mirror 13 is also a concave mirror, and has its reflection surface 13a facing forward. Directional reflected light L5 reflected off the reflection surface 13a of the directional mirror 13 passes through the translucent cover plate covering the opening 11d, and is directed toward the windscreen glass 4.

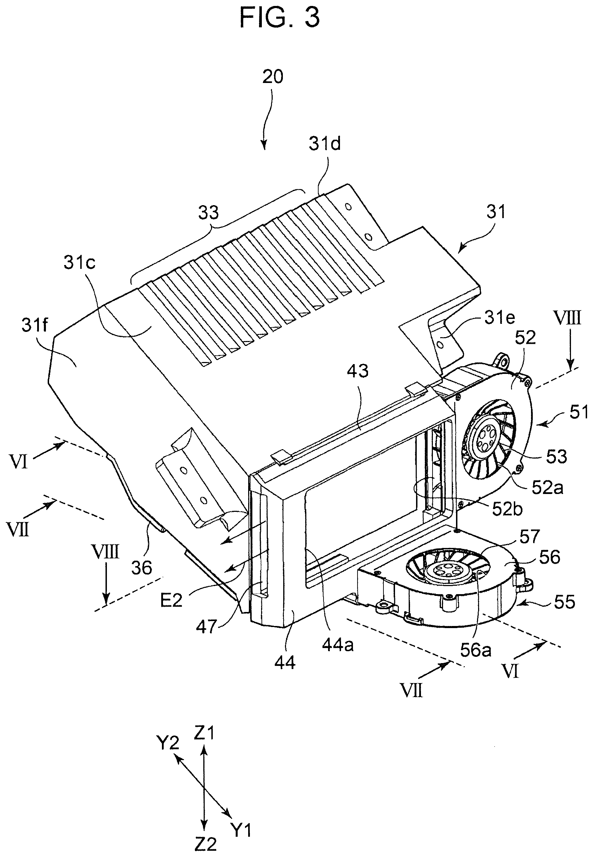

With reference to Fig. 3 and the following drawings, the structure of the projector 20 is described in detail.

As illustrated in Fig. 3 to Fig. 10, the projector 20 includes a heat-radiating metal member 31. The heat-radiating metal member 31 is a housing that stores or holds components of the projector 20. The heat-radiating metal member 31 is formed from a light metal having high thermal conductivity, such as aluminum or an aluminum alloy.

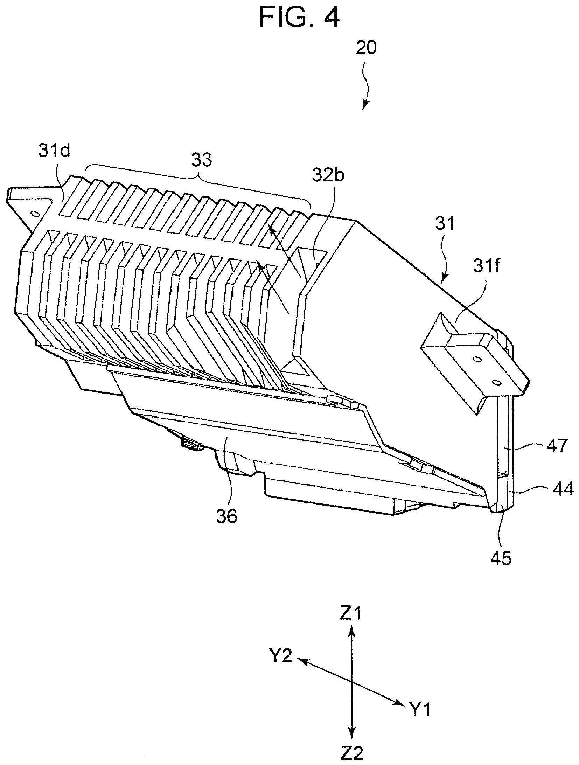

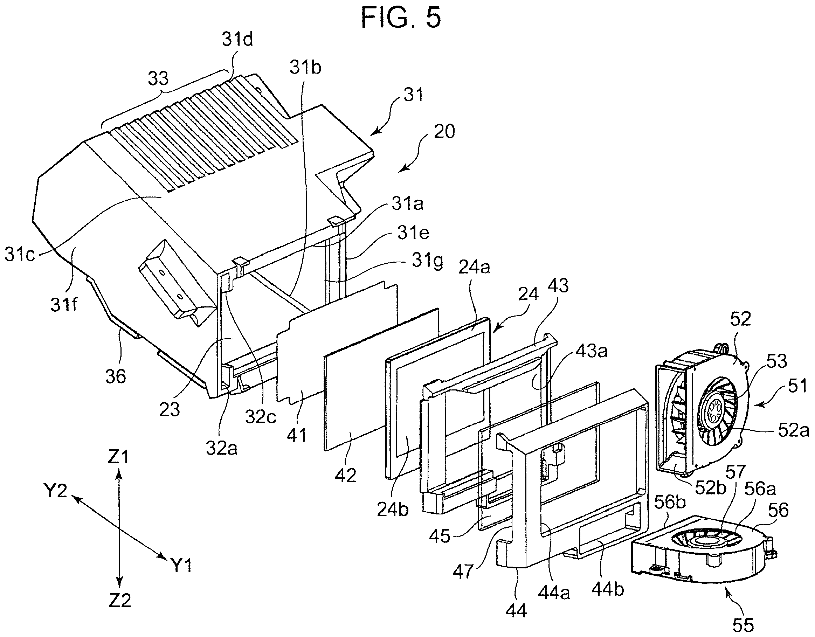

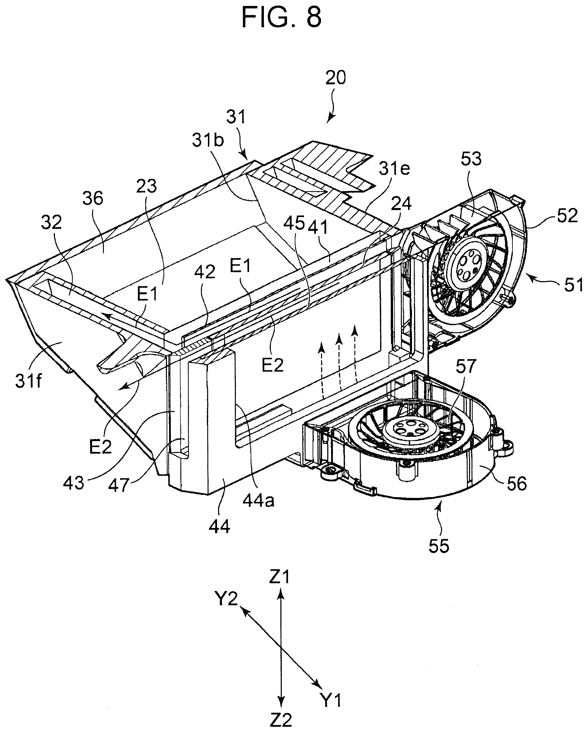

As illustrated in, for example, Fig. 5 and Fig. 8, the heat-radiating metal member 31 includes a front opening 31a, which faces to the front (Y1 direction) and slightly upward (Z1 direction), and a lower opening 31b, which faces substantially downward (Z2 direction). The heat-radiating metal member 31 includes a ceiling 31c, which faces substantially upward (Z1 direction), and a rear wall 31d, facing substantially rearward (Y2 direction), and a right wall 31e and a left wall 31f. As illustrated in Fig. 4, multiple radiating fins 33 are integrated with the heat-radiating metal member 31, extending from the ceiling 31c to the rear wall 31d. The radiating fins 33 have a shape including projections and depressions to increase the area of the radiating surface of the heat-radiating metal member 31.

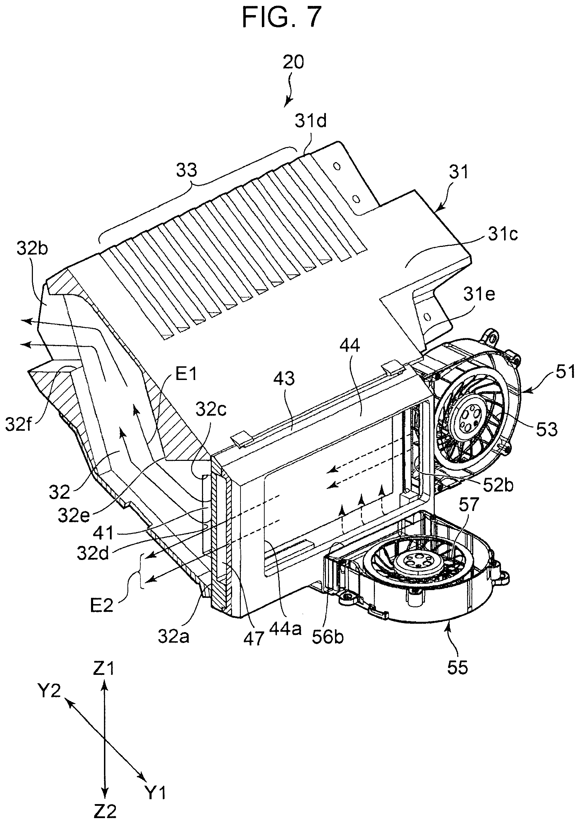

As illustrated in Fig. 4, Fig. 5, Fig. 8, and Fig. 9, an air vent 32 is formed in the left wall 31f of the heat-radiating metal member 31. The air vent 32 includes a front open end 32a and a rear open end (rear exhaust port) 32b. As illustrated in Fig. 5, the front open end 32a is located on the side of the front opening 31a. As illustrated in Fig. 7, at a border between the front open end 32a and the front opening 31a, a front recess 32c that connects the air vent 32 and the front opening 31a to each other is formed. The front recess 32c is recessed rearward, and includes a rear inner end 32d. As illustrated in Fig. 4, the rear open end 32b of the air vent 32 is open in the rear wall 31d of the heat-radiating metal member 31, and located beside the radiating fins 33.

As illustrated in Fig. 7, bent portions 32e and 32f are formed in the air vent 32 at multiple portions (two portions) from the front open end 32a to the rear open end 32b. The bent portions 32e and 32f formed inside the air vent 32 can increase the contact area between the airflow that flows through the air vent 32 and an inner wall surface of the air vent 32.

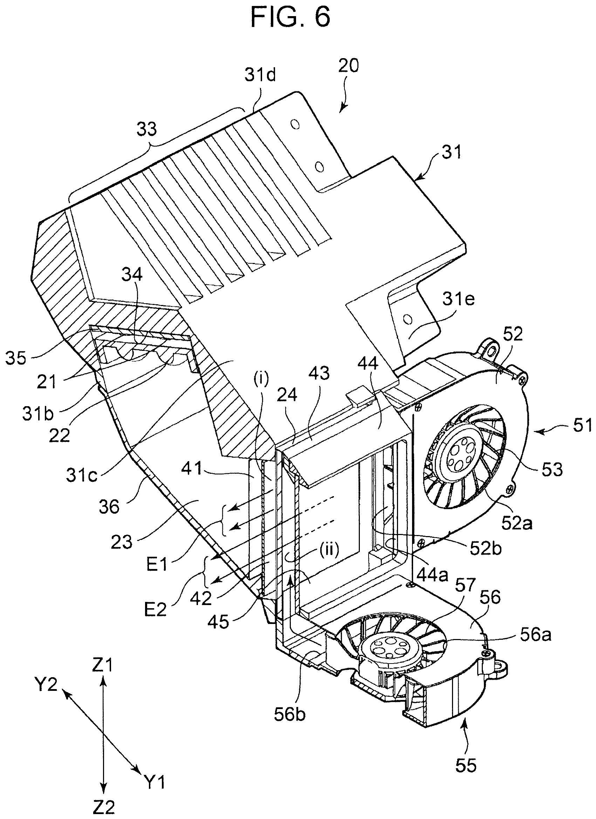

As illustrated in Fig. 6, inside the heat-radiating metal member 31 forming a housing, a support inner surface 34 is disposed at a position near the radiating fins 33. A support board 35 adheres and is fixed to the support inner surface 34. Multiple light sources 21 are mounted on the mount surface of the support board 35 facing downward (Z2 direction). The light sources 21 are LEDs. In the interior space of the heat-radiating metal member 31, the lens 22 is fixed to a portion below the light sources 21. The lens 22 is a lens array including multiple convex lenses integrated together.

As illustrated in Fig. 5, Fig. 6, and Fig. 8, a mirror support member 36 is fitted and fixed to the lower opening 31b of the heat-radiating metal member 31. The plane mirror 23 is fixed to an upper surface of the mirror support member 36 facing the lens 22.

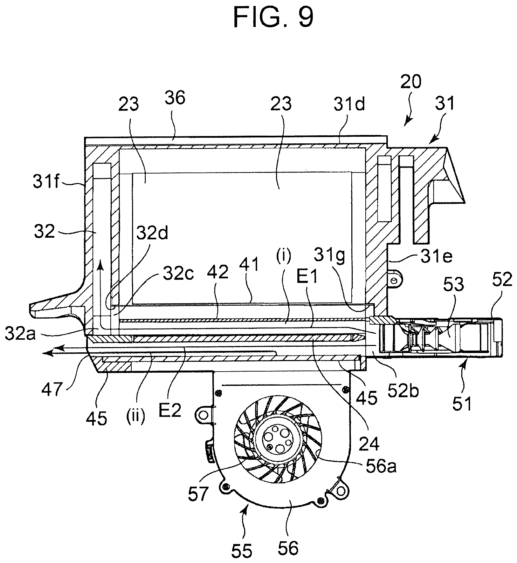

As illustrated in Fig. 5 and Fig. 9, in the front opening 31a of the heat-radiating metal member 31, an inner stepped portion 31g is disposed on the inner side of the right wall 31e. As illustrated in Fig. 6 and Fig. 9, a diffuser panel 41 is disposed on the inner side of the front opening 31a of the heat-radiating metal member 31. The diffuser panel 41 is bonded and fixed to the heat-radiating metal member 31 while being in contact with the inner stepped portion 31g on the inner side of the right wall 31e, and the rear inner end 32d of the front recess 32c disposed at the border between the front open end 32a of the air vent 32 and the front opening 31a. As illustrated in Fig. 9, an end of the diffuser panel 41, on the left in Fig. 9, leaves the air vent 32 uncovered.

As illustrated in Fig. 5, Fig. 6, and Fig. 9, a rear translucent plate 42 is fixed to the front opening 31a of the heat-radiating metal member 31. The rear translucent plate 42 is fixed while being spaced from the diffuser panel 41 to the front. The rear translucent plate 42 is a rear polarizing plate including a transparent plate and a polarizing layer on the surface of the transparent plate.

As illustrated in Fig. 5, a rear frame 43 is fixed to the front end surface of the front opening 31a of the heat-radiating metal member 31. The rear frame 43 is formed from a synthetic resin material or a light metal. The image generating unit 24 is bonded and fixed to the rear surface of the rear frame 43 facing rearward (Y2 direction). The image generating unit 24 includes a frame portion 24a, and a TFT liquid crystal panel 24b, surrounded by the frame portion 24a. A rectangular window portion 43a is open in the rear frame 43, and the TFT liquid crystal panel 24b is located in the window portion 43a. As illustrated in Fig. 9, the image generating unit 24 supported by the rear frame 43 is located to the front of the rear translucent plate 42. A rear gap (i), which serves as a rear air conduit, is formed between the rear translucent plate 42 and the image generating unit 24.

As illustrated in Fig. 5, Fig. 7, Fig. 8, and Fig. 9, a front frame 44 is fixed to a portion in front of the rear frame 43. The front frame 44 is formed from a synthetic resin material or a light metal. A front translucent plate 45 is bonded and fixed to the rear surface of the front frame 44 facing rearward (Y2 direction). A rectangular window portion 44a is formed in the front frame 44, and is covered with the front translucent plate 45. The front translucent plate 45 includes a transparent plate and a polarizing layer on the rear surface of the transparent plate. The front translucent plate 45 includes, on the front surface, a cold filter that blocks a predetermined wavelength range of sunlight. The front translucent plate 45 functions as a front polarizing plate and a light-beam filter. As illustrated in Fig. 9, a front gap (ii), serving as a front air conduit, is formed between the image generating unit 24 supported by the rear frame 43 and the front translucent plate.

As illustrated in Fig. 7, Fig. 8, and Fig. 9, the rear gap (i) formed between the image generating unit 24 and the rear translucent plate 42 is connected to the front open end 32a of the air vent 32 through the front recess 32c. Almost the entirety of a rear airflow E1, which flows through the rear gap (i) leftward in the drawing, is guided from the front open end 32a into the air vent 32.

As illustrated in Fig. 3, Fig. 7, Fig. 8, and Fig. 9, a front exhaust port 47, which is open leftward in the drawings, is formed between the rear frame 43 and the front frame 44. The front gap (ii) formed between the image generating unit 24 and the front translucent plate 45 is connected to the exterior space of the projector 20 from the front exhaust port 47. The front gap (ii) is substantially entirely closed at the upper portion (Z1 direction) and the lower portion (Z2 direction). Almost the entirety of the front airflow E2, which flows through the front gap (ii) leftward in the drawings is exhausted to the exterior space through the front exhaust port 47. The front airflow E2, flowing through the front gap (ii) leftward in the drawings, does not flow into the air vent 32.

In an embodiment of the present invention, both the rear airflow E1 and the front airflow E2 may flow into the air vent 32, or almost the entirety of the rear airflow E1 may flow into the air vent 32, a part of the front airflow E2 may flow into the air vent 32, and another part of the front airflow E2 may be exhausted to the exterior space from the front exhaust port 47. Alternatively, a part of the rear airflow E1 and a part of the front airflow E2 may flow into the air vent 32 together, and another part of the rear airflow E1 and another part of the front airflow E2 may be exhausted together to the exterior space without flowing into the air vent 32.

As illustrated in, for example, Fig. 3 and Fig. 5, a first blowing system 51 and a second blowing system 55 are disposed in front of the projector 20. The first blowing system 51 includes a case 52, a fan 53, rotatably disposed in the case 52, and a motor that rotates the fan 53. The case 52 has an inlet port 52a, facing frontward, and a draft port 52b, facing leftward in the drawing. As illustrated in Fig. 9, the draft port 52b of the first blowing system 51 is fitted into a gap between the rear translucent plate 42 and the front frame 44. Air is blown from the draft port 52b of the first blowing system 51 to the rear gap (i) and the front gap (ii).

The second blowing system 55 includes a case 56, a fan 57, rotatably disposed in the case 56, and a motor that rotates the fan 57. The case 56 has an inlet port 56a, facing upward (Z1 direction), and a draft port 56b, facing rearward (Y2 direction). As illustrated in Fig. 5, the front frame 44 has a fitting port 44b, which is open below the window portion 44a and into which the draft port 56b of a second blowing system 55 is fitted. As illustrated in Fig. 6, Fig. 7, Fig. 9, and Fig. 10, air is blown from the draft port 56b of the second blowing system 55 to the front gap (ii).

Subsequently, operations of the projector 20 and the head-up display device 10 are described.

When the ignition switch of an automobile is turned on, light sources 21 of the projector 20 are lit. As illustrated in Fig. 2, light from the light sources 21 passes through the lens 22 to be formed into a light beam L1, and the light beam L1 is reflected off the plane mirror 23 to be formed into reflected light L2. The reflected light L2 passes through the image generating unit 24 to be output in the form of projection light L3 accompanied with an image generated by the TFT liquid crystal panel 24b of the image generating unit 24. The projection light L3 is reflected off the reflection surface 12a of the intermediate mirror 12 to be formed into intermediate reflected light L4, which is directed to the directional mirror 13. Thereafter, the intermediate reflected light L4 is reflected off the reflection surface 13a of the directional mirror 13, and the directional reflected light L5 passes through the translucent cover plate at the opening 11d of the housing 11 to be applied to the windscreen glass 4.

The windscreen glass 4 functions as a slightly curved semitransparent mirror. The directional reflected light L5 reflected off the directional mirror 13 is applied to the inner surface of the windscreen glass 4, as illustrated in Fig. 1, and a part of light is concentrated on the eyes of an observer (driver) D, seated on the driver's seat 7. Thus, the observer D can visually recognize, with his/her eyes, a virtual image I formed in the exterior space 6 in front of the windscreen glass 4.

In the projector 20, the light sources 21 generate heat, and the heat is conducted to the heat-radiating metal member 31 from the support board 35 illustrated in Fig. 6 through the support inner surface 34. Heat radiated to the interior space of the heat-radiating metal member 31 from the light sources 21 through the lens 22 is also conducted to the heat-radiating metal member 31. The heat-radiating metal member 31, including the multiple radiating fins 33, has a larger contact area with the exterior space, and thus facilitates heat radiation from the heat-radiating metal member 31 to the exterior space.

In the car-mount head-up display device 10, outdoor light (sunlight) passes through the windscreen glass 4, passes through the opening 11d of the housing 11, and is applied to the directional mirror 13. This outdoor light is reflected off the reflection surface 13a of the directional mirror 13, and also reflected off the reflection surface 12a of the intermediate mirror 12, and applied to the projector 20. The intermediate mirror 12 and the directional mirror 13 are concave mirrors, and arranged to have higher power in order from the projector 20 toward the windscreen glass 4. Thus, the energy of the outdoor light (sunlight) is condensed and concentrated on the projector 20.

In the projector 20, the front translucent plate 45 is disposed on the window portion 44a of the front frame 44, and the front translucent plate 45 has a polarizing layer and a cold filter. Thus, heat of sunlight is blocked to some extent by the front translucent plate 45, so that the effect of sunlight on the image generating unit 24 can be reduced. This structure, however, fails to completely prevent the energy of sunlight from being condensed on or entering the interior space of the heat-radiating metal member 31. Thus, it is difficult to prevent a temperature rise in the interior space of the heat-radiating metal member 31 due to the energy of sunlight and heat generation at the light sources 21.

To address this, while the head-up display device 10 is in operation, the first blowing system 51 and the second blowing system 55 are driven to blow wind to the TFT liquid crystal panel 24b of the image generating unit 24 to prevent a temperature rise of the TFT liquid crystal panel 24b and malfunction of the TFT liquid crystal panel 24b.

As illustrated in Fig. 8 and Fig. 9, wind generated by the first blowing system 51 is blown from the draft port 52b to the rear gap (i), between the image generating unit 24 and the rear translucent plate 42, and to the front gap (ii), between the image generating unit 24 and the front translucent plate 45.

Wind blown to the rear gap (i) from the first blowing system 51 forms a rear airflow E1, directing leftward in the drawings through the rear gap (i). As illustrated in Fig. 7 and Fig. 9, the left end, in the drawing, of the rear gap (i) is connected to the air vent 32 of the heat-radiating metal member 31 through the front recess 32c. Thus, the rear airflow E1 flows from the rear gap (i) into the air vent 32 through the front recess 32c and the front open end 32a, and exhausted to the exterior space through the rear open end 32b illustrated in Fig. 4.

As illustrated in Fig. 7, the rear airflow E1 flows against the multiple bent portions 32e and 32f inside the air vent 32 to be redirected toward the rear open end 32b. Thus, the rear airflow E1 and the heat-radiating metal member 31 come into contact with each other for a longer period and over a larger area. When the rear airflow E1 flows along the rear surface of the TFT liquid crystal panel 24b, the heat of the rear airflow E1 absorbed from the TFT liquid crystal panel 24b is effectively conducted to the heat-radiating metal member 31, and radiated to the exterior space through the radiating fins 33 of the heat-radiating metal member 31.

The rear airflow E1 is cooled while passing through the air vent 32. This prevents a high-temperature air from locally blowing out from the rear open end (rear exhaust port) 32b of the air vent 32. Thus, a local temperature rise in the rear space near the rear open end 32b is prevented, and other devices (a speedometer, a navigation system, and a resin-made structure) disposed adjacent to the rear open end 32b are prevented from being affected with heat. The heat-radiating metal member 31 capable of preventing the temperature rise of the rear airflow E1 enables effective prevention of a temperature rise of the TFT liquid crystal panel 24b of the image generating unit 24 with the rear airflow E1 that passes through the rear gap (i) .

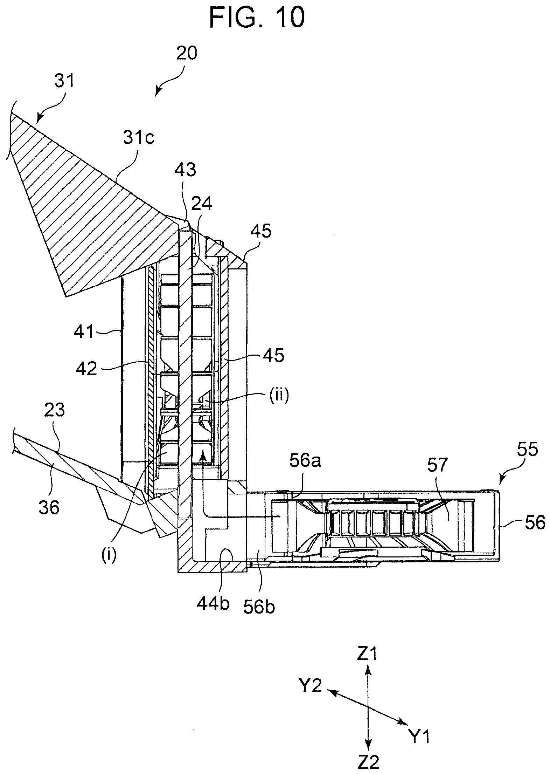

As illustrated in Fig. 8 and Fig. 9, part (approximately half) of wind generated by the first blowing system 51 is blown from the draft port 52b to the front gap (ii), between the image generating unit 24 and the front translucent plate 45. As illustrated in Fig. 10, concurrently, wind generated by the second blowing system 55 is also blown from the draft port 56b to the front gap (ii). Wind is thus blown to the front gap (ii) from the first blowing system 51 and the second blowing system 55 in different directions (orthogonal directions), and is mixed. Thus, heat generated from the front surface of the TFT liquid crystal panel 24b is less likely to stay in the front gap (ii), and effectively conducted to the air in the front gap (ii) to enhance the cooling effect. The mixed wind is formed into a front airflow E2, and flows leftward, in the drawing, in the front gap (ii) along the front surface of the TFT liquid crystal panel 24b to be exhausted from the front exhaust port 47 to the exterior space.

The image generating unit 24 has its front and rear surfaces touched with different airflows, and can thus be effectively cooled. In the embodiment, the rear airflow E1 and the front airflow E2 are independent, different flows. Thus, heat of one airflow does not heat the other airflow, and heat generated by the TFT liquid crystal panel 24b is effectively absorbed by the airflows at the front surface and the rear surface to enable effective cooling.

The projector 20 according to the embodiment is included in the head-up display device 10 for a vehicle. Instead of a vehicle, the projector 20 according to an embodiment of the present invention is applicable to other devices that can affect other devices. Alternatively, an embodiment of the present invention is also applicable to a device used for projecting an image on a screen inside or outside.

## Claims

1. A projector (20), including a light source (21), an image generating unit (24), and an optical system (22, 23) configured to transmit light from the light source (21) through the image generating unit (24) and output the light as projection light, comprising:
a heat-radiating metal member (31) to which heat from the light source (21) is conducted; and
a blowing system (51, 55) configured to blow an airflow to the image generating unit (24),
**characterized in that** the heat-radiating metal member (31) has an air vent (32) running therethrough, the air vent (32) being configured to pass at least a part of an airflow that is generated at the blowing system (51, 55) and that has passed through the image generating unit (24),
wherein the blowing system (51, 55) is configured to form a front airflow (E2), which flows along a front surface of the image generating unit (24) facing in a direction in which the image generating unit (24) projects light, and a rear airflow (E1), which flows along a rear surface of the image generating unit (24) that receives light from the light source (21),
wherein at least a part of the rear airflow (E1) passes through the air vent (32), and
wherein the front airflow (E2) is exhausted to an outside without being directed to the air vent (32).

2. The projector (20) according to Claim 1,
wherein a front translucent plate (45) is disposed in front of the image generating unit (24), and a rear translucent plate (42) is disposed at a rear of the image generating unit (24),
wherein the rear airflow (E1) is formed in a gap between the rear surface of the image generating unit (24) and the rear translucent plate (42), and
wherein the front airflow (E2) is formed in a gap between the front surface of the image generating unit (24) and the front translucent plate (45).

3. The projector (20) according to Claim 2, further comprising:
a rear frame (43) configured to support the image generating unit (24); and
a front frame (44) disposed on the front surface of the image generating unit (24) and configured to hold the front translucent plate (45).

4. The projector (20) according to any one of Claims 1 to 3, wherein the blowing system (51, 55) is provided as a plurality of blowing systems (51, 55), and the plurality of blowing systems (51, 55) blow airflows to the image generating unit (24) in different directions.

5. A head-up display device, comprising:
the projector (20) according to any one of Claims 1 to 4; and
a directional mirror (13) configured to reflect projection light output from the projector (20) to direct reflected light obliquely upward to a semitransparent mirror (4) positioned in front of a driver's seat of a vehicle.

6. A vehicle comprising a head-up display device according to claim 5.

## Patentansprüche

1. Projektor (20) mit einer Lichtquelle (21), einer Bilderzeugungseinheit (24) und einem optischen System (22, 23), das dazu ausgebildet ist, Licht von der Lichtquelle (21) durch die Bilderzeugungseinheit (24) zu übertragen und das Licht als Projektionslicht abzugeben, aufweisend:
ein wärmeabstrahlendes Metallelement (31), zu dem Wärme von der Lichtquelle (21) geleitet wird; und
ein Blassystem (51, 55), das dazu ausgebildet ist, einen Luftstrom zu der Bilderzeugungseinheit (24) zu blasen,
**dadurch gekennzeichnet, dass** das wärmeabstrahlende Metallelement (31) eine sich durch dieses hindurch erstreckende Entlüftungsöffnung (32) aufweist, wobei die Entlüftungsöffnung (32) dazu ausgebildet ist, mindestens einen Teil eines Luftstroms hindurchzulassen, der an dem Blassystem (51, 55) erzeugt wird und der die Bilderzeugungseinheit (24) durchlaufen hat, wobei das Blassystem (51, 55) dazu ausgebildet ist, einen vorderen Luftstrom (E2) zu bilden, der entlang einer vorderen Oberfläche der Bilderzeugungseinheit (24) strömt, die in eine Richtung weist, in die die Bilderzeugungseinheit (24) Licht projiziert, sowie einen hinteren Luftstrom (E1) zu bilden, der entlang einer hinteren Oberfläche der Bilderzeugungseinheit (24) strömt, die Licht von der Lichtquelle (21) empfängt,
wobei mindestens ein Teil des hinteren Luftstroms (E1) durch die Entlüftungsöffnung (32) strömt, und
wobei der vordere Luftstrom (E2) nach außen ausgeleitet wird, ohne zu der Entlüftungsöffnung (32) geleitet zu werden.

2. Projektor (20) nach Anspruch 1,
wobei eine vordere lichtdurchlässige Platte (45) vor der Bilderzeugungseinheit (24) angeordnet ist und eine hintere lichtdurchlässige Platte (42) rückseitig von der Bilderzeugungseinheit (24) angeordnet ist,
wobei der hintere Luftstrom (E1) in einem Spalt zwischen der hinteren Oberfläche der Bilderzeugungseinheit (24) und der hinteren lichtdurchlässigen Platte (42) gebildet wird, und
wobei der vordere Luftstrom (E2) in einem Spalt zwischen der vorderen Oberfläche der Bilderzeugungseinheit (24) und der vorderen lichtdurchlässigen Platte (45) gebildet wird.

3. Projektor (20) nach Anspruch 2,
weiterhin aufweisend:
einen hinteren Rahmen (43), der zum Abstützen der Bilderzeugungseinheit (24) ausgebildet ist; und
einen vorderen Rahmen (44), der an der vorderen Oberfläche der Bilderzeugungseinheit (24) angeordnet und dazu ausgebildet ist, die vordere lichtdurchlässige Platte (45) zu halten.

4. Projektor (20) nach einem der Ansprüche 1 bis 3,
wobei das Blassystem (51, 55) in Form einer Mehrzahl von Blassystemen (51, 55) vorgesehen ist und die Mehrzahl von Blassystemen (51, 55) Luftströme in verschiedenen Richtungen zu der Bilderzeugungseinheit (24) bläst.

5. Head-up-Display-Vorrichtung, aufweisend:
den Projektor (20) nach einem der Ansprüche 1 bis 4; und
einen Richtungsspiegel (13), der dazu ausgebildet ist, von dem Projektor (20) abgegebenes Projektionslicht zu reflektieren, um reflektiertes Licht schräg nach oben zu einem halbtransparenten Spiegel (4) zu leiten, der vor einem Fahrersitz eines Fahrzeugs positioniert ist.

6. Fahrzeug mit einer Head-up-Display-Vorrichtung nach Anspruch 5.

## Revendications

1. Projecteur (20) qui englobe une source de lumière (21), une unité de génération d'images (24) et un système optique (22, 23) qui est configuré pour transmettre de la lumière à partir de la source de lumière (21) à travers l'unité de génération d'images (24) et pour émettre la lumière sous la forme d'une lumière de projection, comprenant :
un élément métallique (31) qui émet un rayonnement thermique, auquel est amenée par conduction de la chaleur qui provient de la source de lumière (21) ; et
un système de soufflerie (51, 55) qui est configuré pour souffler un flux d'air dans la direction de l'unité de génération d'images (24) ;
**caractérisé en ce que** l'élément métallique (31) qui émet un rayonnement thermique possède un orifice d'évacuation pour l'air (32) qui s'étend à travers l'élément en question, l'orifice d'évacuation pour l'air (32) étant configuré pour laisser passer au moins une partie d'un flux d'air qui est généré au système de 20soufflerie (51, 55) et qui est passé par l'unité de génération d'images (24) ;
dans lequel le système de soufflerie (51 55) est configuré pour former un flux d'air avant (E2) qui s'écoule le long d'une surface avant de l'unité de génération d'images (24), orientée dans une direction dans laquelle l'unité de génération d'images (24) projette de la lumière, et un flux d'air arrière (E1) qui s'écoule le long d'une surface arrière de l'unité de génération d'images (24), qui reçoit de la lumière à partir de la source de lumière (21) ;
dans lequel au moins une partie du flux d'air arrière (E1) passe à travers l'orifice d'évacuation pour l'air (32) ; et
dans lequel le flux d'air avant (E2) est évacué vers l'extérieur sans être dirigé dans la direction de l'orifice d'évacuation pour l'air (32).

2. Projecteur (20) selon la revendication 1,
dans lequel une plaque translucide avant (45) est disposée à l'avant de l'unité de génération d'images (24) et une plaque translucide arrière (42) est disposée à l'arrière de l'unité de génération d'images (24) ;
dans lequel le flux d'air arrière (E1) est formé dans un espace libre ménagé entre la surface arrière de l'unité de génération d'images (24) et la plaque translucide arrière (42) ; et
dans lequel le flux d'air avant (E2) est formé dans un espace libre ménagé entre la surface avant de l'unité de génération d'images (24) et la plaque translucide avant (45).

3. Projecteur (20) selon la revendication 2, qui comprend en outre :
un cadre arrière (43) qui est configuré pour supporter l'unité de génération d'images (24) ; et
un cadre avant (44) qui est disposé sur la surface avant de l'unité de génération d'images (24) et qui est configuré pour maintenir la plaque translucide avant (45).

4. Projecteur (20) selon l'une quelconque des revendications 1 à 3, dans lequel le système de soufflerie (51, 55) est fourni sous la forme d'un certain nombre de systèmes de soufflerie (51, 55) et lesdits plusieurs systèmes de soufflerie (51, 55) soufflent des fluxs d'air dans la direction de l'unité de génération d'images (24) dans des directions différentes.

5. Dispositif d'affichage de type tête haute, qui comprend :
le projecteur (20) selon l'une quelconque des revendications 1 à 4 ; et
un miroir directionnel (13) qui est configuré pour réfléchir la lumière de projection émise par le projecteur (20) dans le but de diriger la lumière réfléchie en oblique vers le haut dans la direction d'un miroir semi-transparent (4) qui est disposé à l'avant d'un siège du conducteur d'un véhicule.

6. Véhicule qui comprend un dispositif d'affichage de type tête haute selon la revendication 5.
